# EUROPEAN PATENT SPECIFICATION

(11) **EP 3 028 541 B1**
(45) Date of publication and mention of the grant of the patent: **22.02.2017**
(21) Application number: 14738810.2
(22) Date of filing: 09.07.2014
(51) Int. Cl.: H05B 33/08

(54) **LED REPLACEMENT LAMP FOR SAFE OPERATION WITH ELECTRO-MAGNETIC BALLAST**
LED-LAMPE FÜR RETROFIT FÜR DEN SICHEREN BETRIEB MIT ELEKTROMAGNETISCHEM BALLAST
LAMPE DE REMPLACEMENT À DEL POUR FONCTIONNEMENT SÉCURISÉ AVEC BALLAST ÉLECTROMAGNÉTIQUE

(30) Priority: 30.07.2013 EP 13178533
(43) Date of publication of application: 08.06.2016
(73) Proprietor: Philips Lighting Holding B.V., 5656 AE Eindhoven (NL)
(72) Inventor: TAO, Haimin, NL-5656 AE Eindhoven (NL); TOUSAIN, Robertus Leonardus, NL-5656 AE Eindhoven (NL); WANG, Shrek, NL-5656 AE Eindhoven (NL); KONG, Jianhong, NL-5656 AE Eindhoven (NL); WEN, Tian Xiang, NL-5656 AE Eindhoven (NL)
(74) Representative: van Eeuwijk, Alexander Henricus Waltherus
(86) International application number: PCT/EP2014/064696
(87) International publication number: WO 2015/014584

(56) References cited:
- WO-A1-2011/014111
- DE-U1-202013 004 107

## Description

### FIELD OF THE INVENTION

The invention relates to an LED replacement lamp, and to a lighting arrangement including an LED replacement lamp. More particularly, the invention relates to a lamp intended to replace a fluorescent tube lamp.

### BACKGROUND OF THE INVENTION

Fluorescent lamps, in particular in the form of fluorescent tube lamps, are today used in many lighting applications. A large number of lighting fixtures for fluorescent tube lamps are installed.

With the availability of highly efficient LED lighting elements, there are already LED replacement lamps available intended to be used as "retrofit" or replacement LED lamps, replacing fluorescent lamps in installed lighting fixtures.

For the operation of fluorescent lamps, electrical configurations are known which comprise a simple electromagnetic (EM) ballast and a glow starter, as well as more advanced configurations including an electronic ballast. The present invention primarily deals with LED lamps for operation in EM ballast electrical configurations.

US 2010/0033095 A1 describes a replacement for a fluorescent lamp with an electrical connector adapted to electrically connect to a fluorescent lamp fixture. The replacement lamp comprises a DC rectifier connected to the electrical connector, a voltage converter connected to the DC rectifier, and LEDs as non-fluorescent light sources connected to the voltage converter. In an embodiment, an AC output from a ballast supplies power to a conversion circuit within the LED replacement tube. The conversion circuit includes protection circuitry that protects components of the conversion circuit and LEDs from damage by high voltage/current/frequency from the ballast. The protection circuitry comprises for example a spark gap. In a configuration with an electronic ballast, cathode heater circuitry is connected to simulate a cathode heater for the electronic ballast presenting a resistor load. The patent document DE 20 2013 004107 U1 shows the following features (the references in brackets referring to this patent document): An LED replacement lamp, comprising one or more LED lighting elements arranged on an elongated member with a first end and an opposite second end, wherein at each of said opposite ends two electrical contacts (A1, A2; A3, A4) are provided, wherein a LED driver circuit (16) is arranged for supplying electrical power to said LED lighting elements, wherein said LED driver circuit (16) is electrically connected only to said electrical contacts (A1, A2) at said first end, and wherein said electrical contacts (A3, A4) at said second end are interconnected by a safety circuit (18).

### SUMMARY OF THE INVENTION

It may be considered an object to provide an LED replacement lamp and lighting arrangement allowing safe operation if connected to an electromagnetic ballast, even in case of fault condition of individual components or in case of misuse.

This object is achieved according to the invention by an LED replacement lamp according to claim 1 and by a lighting arrangement according to claim 6. Dependent claims refer to preferred embodiments of the invention.

The lamp according to the invention comprises one or more LED lighting elements arranged on an elongated member with a first end and opposite second end. In the present context, the term "LED" is used broadly, covering all types of solid state lighting elements, including individual components as well as electrical circuits with multiple components, or groups of components, the components including both light emitting diodes (LED) and organic light emitting diodes (OLED).

The elongated member may in particular be of a size corresponding to standardized fluorescent tube lamps, e. g. 205 mm, 325 mm, 355 mm, etc. and may comprise e. g. an at least partially transparent housing, particularly in tube form. At each of the opposite ends, two electrical contacts are provided, preferably in the form of protruding contact pins.

As part of the LED replacement lamp, an LED driver circuit is arranged on the elongated member and electrically connected to the LED lighting elements to supply electrical power thereto. The LED driver circuit may in particular comprise a rectifier circuit, so that power supplied as AC electrical power to the LED driver circuit is converted to DC electrical power, which may be supplied to the one or more LED lighting elements either directly, or, preferably, through control of an intermediate circuit.

According to the invention, the LED driver circuit is electrically connected only to the electrical contacts at the first end of the elongated member. Thus, the operating power for the LED driver circuit and for the LED lighting elements connected to the driver circuit is entirely supplied at one end. This may simplify the structure of the electrical circuit provided on the elongated member.

The electrical contacts at the second, opposite end are interconnected, according to the invention, by a safety circuit. This safety circuit is disposed to provide at least two functions, namely a current limitation function and a defined electrical resistance between the contacts. The electrical resistance between the contacts, which may e. g. be provided by one or more electrical resistor components, serves to establish a desired current if an operating voltage is applied to the contacts. In particular, to provide the electrical resistance function of the safety circuit such that if a test voltage of 3.6 V is applied between the contacts, the resulting electrical current is less than 0.51 A, the resistance value of the electrical resistance function of the safety circuit is preferably 7.06 Ω or above, preferably 7.5 Ω or above. According to the invention, it is more specifically proposed that a fixed electrical resistance of 7.06 Ω or above is provided between the contacts, allowing the impedance between the electrical contacts being always higher than 7.06 Ω. Further, the safety circuit is disposed to provide a current limitation, i. e. prevent the flow of a current above a defined maximum current. This maximum current is preferably below 0.51 A, further preferred 400 mA or below, still further preferably 150 - 250 mA. In case of a higher current, it is preferred that the safety circuit, due to its current limitation function, shuts down electrical conduction between the contacts at the second end.

The LED replacement lamp according to the invention is protected against lamp overcurrent and filament overcurrent. As will become apparent in connection with detailed embodiments, possible fault conditions, in particular possible fault conditions within the LED driver circuit, such as diode failure, may lead to a mode of operation which can damage an EM ballast. Due to the current limitation, this can be effectively prevented. Simultaneously, the safety circuit provides, under normal operating conditions, a defined, limited filament current (i. e. current between the contact at the second end), which particularly preferred is less than 0.51 A if 3.6 V heating voltage is applied.

Thus, the LED replacement lamp according to the invention achieves safe operation in configurations with an electromagnetic ballast.

Further, the LED replacement lamp with the safety circuit according to the invention provides safety even in cases of misuse, namely if the lamp is operated on an electronic (HF) ballast, because the safety circuit prevents overloading of the filament supply circuit of the electronic ballast.

According to preferred embodiments, there are several possibilities how the safety circuit may be realized. In one embodiment, the safety circuit may comprise a current limiting element, such as e. g. an electrical fuse with a meltable fuse wire, a Positive Temperature Coefficient (PTC) element, or an electronic fuse circuit disposed to automatically interrupt current flow between the electrical contacts in case of overcurrent. This current limiting element may be connected in series to an electrical resistor element, which may e. g. be a single electrical resistor component or an electrical circuit comprising multiple components, in particular one or more electrical resistors. The series connection of the current limiting element and the electrical resistor element provides in combination the desired function of current limitation and electrical resistance of the safety circuit.

In one preferred embodiment, the safety circuit may comprise, or even completely be realized by, a fusistor, i. e. an electrical fuse with defined electrical resistance. Thus, it is possible to realize both safety functions of the safety circuit in a single electrical component.

In a particularly preferred embodiment, the safety circuit may comprise a PTC element. The PTC element may e. g. be provided in series with an electrical resistor, but it is alternatively possible to chose a PTC element providing under normal operating conditions a defined, desired electrical resistance value corresponding to the electrical resistance function of the safety circuit, and also having a PTC trigger threshold providing the desired current limitation function. The advantage of a PTC element is that the current limitation is resettable, i. e. while excessive current flow is effectively interrupted, the PTC element and the entire LED replacement lamp equipped with it will function normally again after power has been cut and the PTC element has sufficiently cooled to reset.

In a preferred lighting arrangement, an LED replacement lamp is installed in a tube lamp fixture. An electromagnetic ballast is connected to the contacts at the first and/or the second end. Particularly preferred, the electromagnetic ballast is connected to one of the contacts at the second end. Additionally the other of the contacts at the second end may be connected to one of the contacts at the first end via a dummy starter, i. e. a through connection. Mains input may be connected to the ballast input and to the other electrical contact at the first end.

It should be appreciated that all combinations of the foregoing concepts and additional concepts discussed in greater detail below are contemplated as being part of the inventive subject matter disclosed herein. In particular, all combinations of claimed subject matter are contemplated as being part of the inventive subject matter disclosed herein.

These and other aspects of the invention will be apparent from and elucidated with reference to the embodiments described hereinafter.

### BRIEF DESCRIPTION OF THE DRAWINGS

In the drawings:
Figure 1 shows a circuit diagram of a lighting arrangement including a first embodiment of an LED replacement lamp;
Figure 2 shows a circuit diagram of a driver circuit connected to a LED lighting element of the replacement lamp of Fig. 1;
Figure 3 shows a circuit diagram of a lighting arrangement including an LED replacement lamp according to a second embodiment.

### DETAILED DESCRIPTION OF THE DRAWINGS

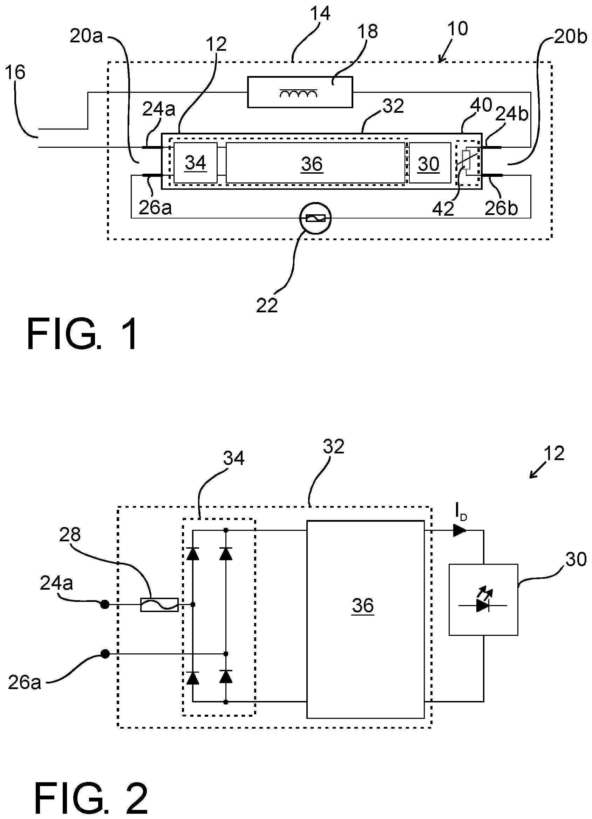

Figure 1 shows a lighting arrangement 10 with a first embodiment of an LED replacement lamp 12 arranged within a lighting fixture 14 and electrically connected to mains power at input terminals 16. The LED replacement lamp 12 is of elongate shape with a first end 20a and an opposite second end 20b.

The lighting fixture comprises an electromagnetic ballast 18 and sockets at the first and second ends 20a, 20b of the LED replacement lamp 12 for electrical connection to the LED replacement lamp 12. The lighting fixture 14 further comprises a starter 22, which has been replaced by a dummy starter, i. e. an electrical through connection, in the shown example comprising an electrical fuse.

The electrical circuit is connected such that the LED replacement lamp 12 is provided with protruding electrical contact pins 24a, 26a at the first end 20a and contact pins 24b, 26b at the second end 20b.

The first contact pin 24a at the first end 20a of the LED replacement lamp 12 is directly connected to mains at the input terminal 16. Further, an input terminal of the EM ballast 18 is directly connected to mains power at the input terminal 16, whereas an output of the EM ballast 18 is connected to a first electrical contact pin 24b provided at the second end 20b of the LED replacement lamp 12. The second electrical contact pin 26b provided at the second end of the LED replacement lamp 12 is connected via the dummy starter to the second electrical contact pin 26a of the first end 20a of the LED replacement lamp 12.

The LED replacement lamp 12 has elongated shape with LED lighting elements 30 provided distributed over the length of the replacement lamp 12. In the drawings, only circuit diagrams are represented so that arrangement of the LED lighting elements 30 is not shown.

The LED replacement lamp 12 further comprises a driver circuit 32 including a rectifier circuit 34 and an intermediate circuit 36. The electrical circuit of the LED replacement lamp 12 is shown in more detail in Fig. 2. The input terminals are electrically connected to the contact pins 24a, 26a provided at a first end. The rectifier 34 shown is a full-bridge rectifier, which is coupled to the input pins 24a, 26a via an electrical fuse 28. The rectifier 34 supplies rectified AC voltage to the intermediate circuit 36. The intermediate circuit 36 supplies DC electrical current I_{D} to the LED lighting elements 30 as required by the specific type of LED of OLED element 30 used.

The driver circuit 32 is electrically connected only to the electrical contact 24a, 26a at the first end 20a of the LED replacement lamp 12.

At the second end 20b of the LED replacement lamp 12, a safety circuit 40 is provided. The safety circuit 40 is not internally electrically connected to the remaining electrical components of the LED replacement lamp 12, but has only electrical connections to the contacts 24b, 26b at the second end 20b.

The safety circuit 40 is directly connected between the contact pins 24b, 26b at the second end of the LED replacement lamp 12. In the shown first embodiment, the safety circuit 40 is entirely comprised of a single PTC element 42. The PTC element is chosen to have an electrical resistance of more than 7.5 Ω under normal operating conditions, i. e. at temperatures of -40° C to 90° C. The PTC element 42 is further chosen to trigger at a current below 0.51 A. Preferably, the PTC is chosen to trigger at a current of e. g. 200 mA.

In operation of the lighting arrangement 10, all IEC requirements regarding ballast safety are met. In normal operating conditions, no DC component is induced, since the rectifier circuit 34 is symmetrical. The filament current, if a test heating voltage of 3.6 V is applied, will be less than 0.51 A due to the resistance chosen rating of the PTC element 42.

Under abnormal conditions, any single component may not work properly, and in extreme cases provide either an electrical open loop or electrical short connection. For example, one of the diodes of the full-bridge rectifier 34 may fail either as a short failure or open failure. This presents a high risk of overheating the electromagnetic ballast 18.

Electrically, the ballast 18 may be modeled as an inductor in series with a resistor. Impedance of the EM ballast 18 at mains input frequency of 50/60 Hz is usually dominated by the inductance. In case of an asymmetry, the DC component of the current through the ballast 18 is, however, determined by the ballast resistance. Ballast resistance values may, depending on energy efficiency classes, range e. g. from 20 - 150 Ω.

If one of the diodes of the input rectifier 34 fails short, the lamp input current increases significantly above the normal operating current. It is possible that the fuse 28 of the LED driver circuit 32 may not be triggered, because the fault current may be limited by a high resistance of the EM ballast. In this case, the EM ballast may be overheated by the fault current.

For the LED replacement lamp 12 shown in Fig. 1, this risk is eliminated. The safety circuit 40 is connected in series with the rest of the circuit. In case of an overcurrent resulting out of a diode short failure in the rectifier 34, the current limiting element, in the embodiment of Fig. 1 the PTC element 42 will trigger to interrupt the fault current.

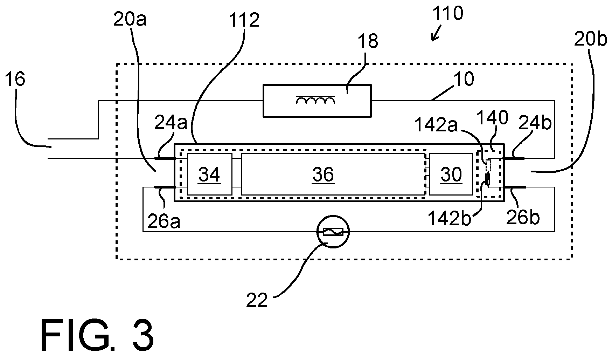

Fig. 3 shows a lighting arrangement 110 including an LED replacement lamp according to a second embodiment. As will be apparent from the circuit diagrams, the second embodiment largely corresponds to the first embodiment, so that in the following only the differences will be explained. Like parts are referenced by like reference numerals.

In the LED replacement lamp 112 according to the second embodiment, a safety circuit 140 is connected between the contact pins 24b, 26b at the second end 20b of the LED replacement lamp 112. The safety circuit 140 is comprised of a series connection of an electrical resistor element 142a and a current limiting element 142b. The electrical resistor element 142a is, in the example shown, a single electrical resistance component rated at 7.5 Ω, whereas the current limiting element 142b is provided as an electrical fuse preferably rated at 200 mA.

In a still further embodiment (not shown), the safety circuit may be provided as a single fusistor, which may e. g. be rated at 200 mA and preferably 7.5 Ω.

While the invention has been illustrated and described in detail in the drawings and foregoing description, such illustration and description are to be considered illustrative or exemplary and not restrictive; the invention is not limited to the disclosed embodiments.

Variations to the disclosed embodiments can be understood and effected by those skilled in the art in practicing the claimed invention, from a study of the drawings, the disclosure and the appended claims. In the claims the word "comprising" does not exclude other elements or steps, and the undefined article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. LED replacement lamp, comprising
- one or more LED lighting elements (30) arranged on an elongated member with a first end (20a) and opposite second end (20b), wherein at each of said opposite ends (20a, 20b) two electrical contacts (24a, 26a; 24b, 26b) are provided,
- wherein a LED driver circuit (32) is arranged for supplying electrical power to said LED lighting elements (30),
- wherein said LED driver circuit (32) is electrically connected only to said electrical contacts (24a, 26a) at said first end (20a),
- and wherein said electrical contacts (24b, 26b) at said second end (20b) are interconnected by a safety circuit (40, 140), **characterised in that**
said safety circuit provides a current limitation and an electrical resistance of 7.06 Ω or above between said contacts (24b, 26b).

2. LED replacement lamp according to claim 1, wherein
- said safety circuit (140) comprises a current limiting element (142b) electrically connected in series to an electrical resistor element (142a).

3. LED replacement lamp according to claim 1, wherein
- said safety circuit comprises a fusistor.

4. LED replacement lamp according to one of the above claims, wherein
- said safety circuit (40) comprises a PTC element (42).

5. LED replacement lamp according to one of the above claims, wherein
- said LED driver circuit (32) comprises a rectifier (34) connected to said electrical contacts (24a, 26a) at said first end (20a).

6. Lighting arrangement, including
- an LED replacement lamp (12, 112) according to one of the above claims,
- and an electromagnetic ballast (18) electrically connected to said contacts (24a, 26a; 24b, 26b) at said first and/or second end (20a, 20b).

7. Lighting arrangement according to claim 6, wherein
- said electromagnetic ballast (18) is connected to one of said contacts (24b) at said second end (20b),
- wherein the other of said contacts (26b) at said second end (20b) is connected to one of said contacts (26a) at said first end (20a) via a dummy starter (22).

## Patentansprüche

1. LED-Retrofit-Lampe, umfassend
- ein oder mehrere LED-Beleuchtungselemente (30), die auf einem länglichen Element mit einem ersten Ende (20a) und gegenüberliegenden zweiten Ende (20b) angeordnet sind, wobei an jedem der gegenüberliegenden Enden (20a, 20b) zwei elektrische Kontakte (24a, 26a; 24b, 26b) bereitgestellt sind,
- wobei eine LED-Treiberschaltung (32) für die Zuleitung von elektrischem Strom zu den LED-Beleuchtungselementen (30) angeordnet ist,
- wobei die LED-Treiberschaltung (32) nur mit den elektrischen Kontakten (24a, 26a) an dem ersten Ende (20a) elektrisch verbunden ist,
- und wobei die elektrischen Kontakte (24b, 26b) an dem zweiten Ende (20b) durch eine Sicherheitsschaltung (40, 140) miteinander verbunden sind, **dadurch gekennzeichnet, dass**
die Sicherheitsschaltung eine Strombegrenzung und einen elektrischen Widerstand von 7,06 Ω oder höher zwischen den Kontakten (24b, 26b) bereitstellt.

2. LED-Retrofit-Lampe nach Anspruch 1, wobei
- die Sicherheitsschaltung (140) ein Strombegrenzungselement (142b) umfasst, das mit einem elektrischen Widerstandselement (142a) elektrisch in Serie verbunden ist.

3. LED-Retrofit-Lampe nach Anspruch 1, wobei
- die Sicherheitsschaltung einen Fusistor umfasst.

4. LED-Retrofit-Lampe nach einem der vorhergehenden Ansprüche, wobei
- die Sicherheitsschaltung (40) ein PTC-Element (42) umfasst.

5. LED-Retrofit-Lampe nach einem der vorhergehenden Ansprüche, wobei
- die LED-Treiberschaltung (32) einen Gleichrichter (34) umfasst, der mit den elektrischen Kontakten (24a, 26a) an dem ersten Ende (20a) verbunden ist.

6. Beleuchtungsanordnung, umfassend
- eine LED-Retrofit-Lampe (12, 112) nach einem der vorhergehenden Ansprüche,
- und ein elektromagnetisches Vorschaltgerät (18), das mit den Kontakten (24a, 26a; 24b, 26b) an dem ersten und/oder zweiten Ende (20a, 20b) elektrisch verbunden ist.

7. Beleuchtungsanordnung nach Anspruch 6, wobei
- das elektromagnetische Vorschaltgerät (18) mit einem der Kontakte (24b) an dem zweiten Ende (20b) verbunden ist,
- wobei der andere der Kontakte (26b) an dem zweiten Ende (20b) mit einem der Kontakte (26a) an dem ersten Ende (20a) über einen Dummy-Starter (22) verbunden ist.

## Revendications

1. Lampe de remplacement à LED, comprenant :
- un ou plusieurs éléments d'éclairage à LED (30) agencés sur un organe allongé avec une première extrémité (20a) et une seconde extrémité opposée (20b), dans laquelle, à chacune desdites extrémités opposées (20a, 20b), deux contacts électriques (24a, 26a ; 24b, 26b) sont prévus,
- dans laquelle un circuit excitateur de LED (32) est agencé pour fournir de l'énergie électrique auxdits éléments d'éclairage à LED (30),
- dans laquelle ledit circuit excitateur de LED (32) est électriquement connecté seulement auxdits contacts électriques (24a, 26a) à ladite première extrémité (20a),
- et dans laquelle lesdits contacts électriques (24b, 26b) à ladite seconde extrémité (20b) sont interconnectés par un circuit de sécurité (40, 140), **caractérisée en ce que**
ledit circuit de sécurité fournit une limite de courant et une résistance électrique de 7,06 Ω ou plus entre lesdits contacts (24b, 26b).

2. Lampe de remplacement à LED selon la revendication 1, dans laquelle
- ledit circuit de sécurité (140) comprend un élément limiteur de courant (142b) électriquement connecté en série à un élément à résistance électrique (142a).

3. Lampe de remplacement à LED selon la revendication 1, dans laquelle
- ledit circuit de sécurité comprend un fusistor.

4. Lampe de remplacement à LED selon l'une des revendications précédentes, dans laquelle
- ledit circuit de sécurité (40) comprend un élément PTC (42).

5. Lampe de remplacement à LED selon l'une des revendications précédentes, dans laquelle
- ledit circuit excitateur de LED (32) comprend un redresseur (34) connecté auxdits contacts électriques (24a, 26a) à ladite première extrémité (20a).

6. Agencement d'éclairage, incluant
- une lampe de remplacement à LED (12, 112) selon l'une des revendications précédentes,
- et un ballast électromagnétique (18) électriquement connecté auxdits contacts (24a, 26a ; 24b, 26b) auxdites première et/ou seconde extrémités (20a, 20b).

7. Agencement d'éclairage selon la revendication 6, dans lequel
- ledit ballast électromagnétique (18) est connecté à l'un desdits contacts (24b) à ladite seconde extrémité (20b),
- dans lequel l'autre desdits contacts (26b) à ladite seconde extrémité (20b) est connecté à l'un desdits contacts (26a) à ladite première extrémité (20a) par l'intermédiaire d'un démarreur fictif (22).
